# EUROPEAN PATENT SPECIFICATION

(11) **EP 0 325 325 B1**
(45) Date of publication and mention of the grant of the patent: **04.09.1996**
(21) Application number: 89200081.1
(22) Date of filing: 16.01.1989
(51) Int. Cl.: H04H 1/00, G11B 27/28, G11B 19/02, H04N 5/92, G09B 5/06, G11B 20/00, G11B 20/12, G11B 17/00

(54) **System for transferring information using an information carrier**
Informationsübertragungssystem mit Informationsträger
Système pour le transfert d'informations utilisant un support d'information

(30) Priority: 19.01.1988 DE 3801332; 18.05.1988 DE 3816832
(43) Date of publication of application: 26.07.1989
(73) Proprietor: Philips Electronics N.V., 5621 BA Eindhoven (NL); POLYGRAM MANUFACTURING & DISTRIBUTION CENTRES GMBH, D-30851 Langenhagen (DE)
(72) Inventor: Blüthgen, Björn, D-3100 Celle (DE)
(74) Representative: Groenendaal, Antonius Wilhelmus Maria

(56) References cited:
- EP-A- 0 093 969
- EP-A- 0 165 320
- EP-A- 0 193 996
- EP-A- 0 245 904
- EP-A- 0 274 382
- FR-A- 2 520 914
- GB-A- 2 144 292
- PRESTON J.M. 'Compact Disc-Interactive: designer's overview' 1987, KLUWER, DEVENTER, NL
- PATENT ABSTRACTS OF JAPAN vol. 11, no. 201 (P-590)(2648) 30 June 1987 & JP-A-62 022 277
- FUNKSCHAU. vol. 57, no. 18, 30 August 1985, MUNCHEN DE 'Compact-Disc-Spieler: Geheimnisvolle Buchse' pages 26 and 28
- PATENT ABSTRACTS OF JAPAN vol. 10, no. 254 (P-492)(2310) 30 August 1986 & JP-A-61 080 686
- PATENT ABSTRACTS OF JAPAN vol. 10, no. 254 (P-492) 30 August 1986 & JP-A-61 080 623

## Description

The invention relates to a system for transferring information, using an information carrier on which main information together with sub digital information has been recorded, bits of the sub information forming a sub information channel, the system including means for separating the bits of the sub information channel after reading from the record carrier. The invention further relates to an information carrier and an apparatus for use in the system.

Such system, information carrier and arrangement are known from the United Kingdom patent application GB 2.118.351.

In this application a CD-player is shown for playing a CD-audio disc in which in the subcode R-W channels additional textual information has been recorded which can be displayed on a displaying device. This additional information can comprise the title of the music piece reproduced, the text of a song reproduced, the name of the artist etc.

The object of the invention is to provide a system as described in the preamble which enable an improved communication with the user of device for playing the information carrier.

According to the invention this object is achieved by a system characterized in that each of said sub information channel packets include at least one category code indicating the type of the of information included in the packet, whereby packets with different category codes are interleaved, and whereby packets with a selected category code are separated from the bits read from the information carrier.

The use of different packets for different information categories allows that for each of a number of different languages an own packet category can be used, so that the user can select the language of the textual information to be displayed. Since the packets are interleaved the average delay time after which the information of the selected category is available is small. In particular, when the information is transferred via the subcode R to W channels of a CD-audio signal the delay time will be very small, due to the high number (75) of packets per second that are transferred then. This high data rate has the advantage that the same information can be repeated a number of times without perceptibly reducing the delay time, so that the reliability of the transfer can be simply improved without any noticeable disadvantage.

An embodiment of the system is characterized in that besides a main category code the packets comprise a sub category code indicating a sub category to which the information of the packets belongs, in that combinations of main category code and a sub category code are detected in the packets, the packets of which the detected combination of main and sub category code corresponds with the selected main and sub category are separated. The use of an information sub-category has the advantages that this allows different types of information to be transferred via packets of different sub-category types. In doing so a simple selection from different types of information, such as title of the song, name of the artist etc, can be made by the user.

Another embodiment of the system is characterized in that a predetermined main category code defines an override function overriding previously selected main category selections. The use of a main information category overriding the previously selected main category has the advantage that for the transfer of language independent information only one main category channel is to be used; in case that channel indicated by said predetermined (override) main category.

A further embodiment of the system is characterized in that a predetermined sub category code defines an override function overriding previously selected sub category selections. This embodiment has the advantage that it allows the transfer of important messages, irrespective of the sub-category selected.

Another embodiment of the system is characterized in that the packets comprise coded text lines and additional control codes. This embodiment has the advantage that the read-out of the information can be simply controlled by information recorded in the packets. A very attractive control code is a text position code, indicating the position at which a coded text line transferred via the separated packets is to be displayed on the displaying device.

A further embodiment of the system is characterized in that the control codes in the packets comprising coded text comprise text position codes for at least two displaying devices of which the number of lines that can be displayed is different. The use of two different text position codes which are assigned to the same coded text line allows the use of different displaying devices without the requirement that for the same information a coded text line is to be transferred for each displaying device.

The system e.g. allows the display of the same text on 21-line display such a CRT-display and on a two line LCD-display. In case that a CDV-player is used the text can displayed on a television screen which is used normally in combination with the CDV-player. The same text case also displayed on the two line display comprised by a CD-player or CDV-player when no television apparatus is available.

Besides codes for controlling the display of the coded text or image information being transferred also command codes for controlling the player and other peripherals can be transferred via the packets separated. Very attractive command codes are codes for initiating a jump of the read-out to an other part of the information track and a command for switching ON and OFF the display used to display the textual information transferred via the packets.

A further embodiment of the system is characterized in that pluralities of packets of the same information category form groups, the beginning of each group being indicated by a start code, in that after a change of the selected category the separating of the packets with information the newly selected category is postponed until the detection of a start code of the group of packets with the information category newly selected. This allows that an integral group of text lines is always presented in sequence from a defined screen position onwards, e.g. from top to bottom.

Another embodiment of the system is characterized in that coded text lines of menus and corresponding command codes are recorded in the packets, in that text lines and corresponding command codes of separated packets are loaded in a menu memory, menu text lines stored in the menu memories are displayed, a menu text line displayed is selected and, the command code stored in the memory and corresponding with the selected menu test line is supplied as a control code to one of the devices. This embodiment has the advantage that in simple way an interactive control of the playing arrangement can be realized.

A further embodiment of the system is characterized in that in that packets comprise an index code indicating the address at which memory location the coded menu text lines and the corresponding command codes are to be stored. This embodiment has the advantage that the loading of the memory for storing the menu information is simple, since the menu organization is completely transferred together with the other information.

A further embodiment of the invention is characterized in that the information carrier is a CD or a CDV-disc with a TABLE OF CONTENTS being recorded in a lead-in track preceding the main information tracks in which the main information is recorded and in that in the lead-in track a Jump Command is recorded in the R- W sub code channel in combination with function control codes.

The invention will now be described in more detail, by way of example, with reference to the accompanying drawings, in which
Figures 1 and 2 show the data structure of a standardized CD-signal,
Figure 3 shows an information packet formed by the R-W subcode signal bits of one block of the standardized CD-signal,
Figure 4 shows a sequence of a number of interleaved packets of different information categories,
Figures 5 and 6 show an embodiment of the data format of packets for use in the system according to the invention,
Figure 7 shows an embodiment of the arrangement for use in the system according the invention,
Figure 8 shows a lay-out of an information track of a information carrier according to the invention,
Figure 9 shows a remote controller for use in the arrangement according to the invention.

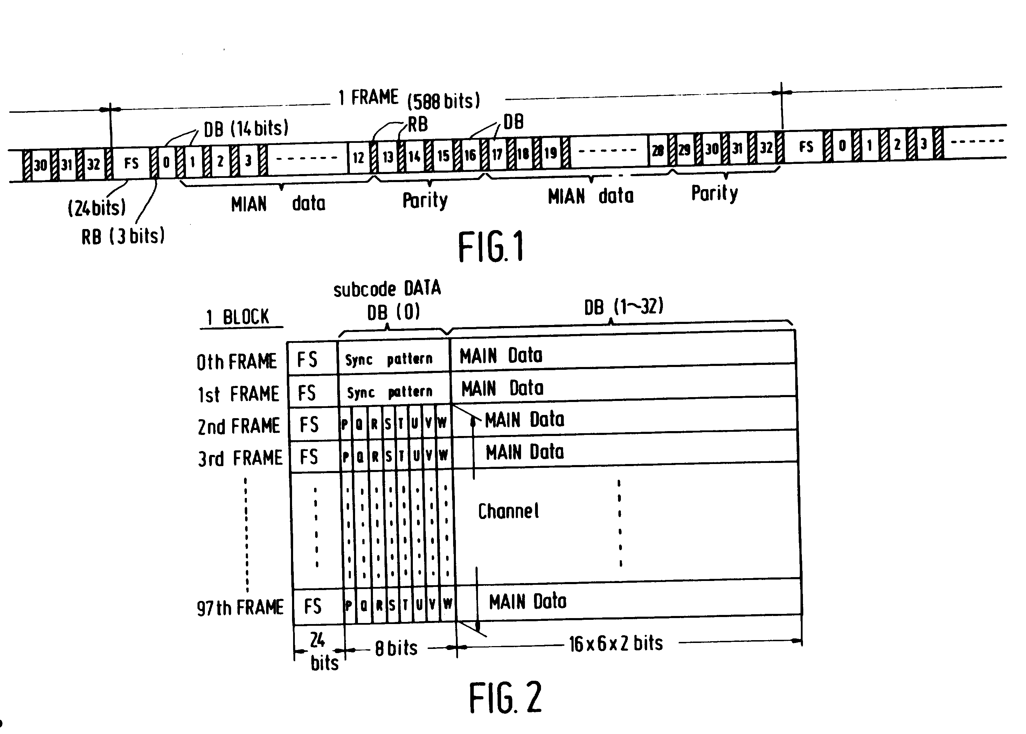

Figure 1 shows the digital data stream recorded on a compact disc or in the audio channel of a CDV-disc. One FRAME consists of 588 bits of record data, and each FRAME has at its head a frame sync pulse FS of a specific bit pattern. The frame sync pulse FS is followed by 3-bits DC-restriction bit group RB. Thereafter, the 0th-32nd data bit groups DB each having fourteen bits and 3-bit DC-restriction bit groups RB are further recorded alternatively. The 0th bit group (DBo) among these data bit group DB are called the subcode signal, and used to control the playback of a disc and to display the relating information or the like. The 1st-12th and 17th-28th data bit groups DB are assigned for audio data in the main channel. The remaining 13th-16th and 29th-32nd data bit groups DB are assigned for parity data of the error correction code in the main information channel. Each of the data bit groups DB consists of 14 bits into which the 8-bit user data has been converted by the 8-14 conversion upon recording.

Figure 2 shows the state of one BLOCK (98 FRAMEs) in that 98 FRAMEs are arranged sequentially in parallel, wherein each of the data bit groups DB is represented by 8 bit of user data and the DC-restriction bits are excluded.

The 8 user data bits represented by the bit groups DBo, form 8 subcode data channels, when taken together. One subcode channel is formed by taking all P bits, one by all the Q - bits and so on through to W. The subcode signals P-W in the 0th and 1st FRAMEs form the sync patterns which are predetermined bit patterns. For the Q-channel, the CRC-codes for error detection are inserted in the latter 16-FRAMEs among the 98 FRAMES.

The P-channel signal is a flag to indicate a music program and a pause, and has a lower level throughout the duration of a music program and a higher level throughout the duration of a pause, and has pulses of 2-Hz period in the lead-out section. It is possible to select and play back the specified music program by detecting and counting this signal in the P-channel. The Q-channel enables the more complicated control of this type. For example, when the Q-channel information is stored in a microcomputer equipped in the disc playback apparatus, it is possible to jump quickly from one music program to another during the playback of a music program; thus, respective ones of the recorded music programs may be selected at random.

According to the invention the other R- to W-channels are used for transferring textual information and commands for interactively controlling the read-out of the information recorded. The format in which these data is transferred will be described in detail further in this application.

Among 98 bits in the Q-channel, the first two bits are used for a sync pattern; next four bits for control bits; following 72 bits for data bits; and at last a CRC-code for error detection is added. A track number code TNR and an index code X are included in 72 bits representative of the data bits. The track number code TNR can be varied from 00 to 99, and the index code X can be likewise changed from 00 to 99. Furthermore, the data in the Q-channel contains a time indication code representative of the time durations of music programs and pauses, and a time indication code indicative of an absolute time duration that continuously changes from the beginning to the end on the most outer rim side in the program area of the compact disc. These time indication codes comprise the code indicating minute, second and FRAME each consisting of two digits. One second is divided into 75 FRAMEs. In order to access the compact disc, such as a digital data, on a shorter unit basis than a music, the time indication code with respect to the above-mentioned absolute time duration is used.

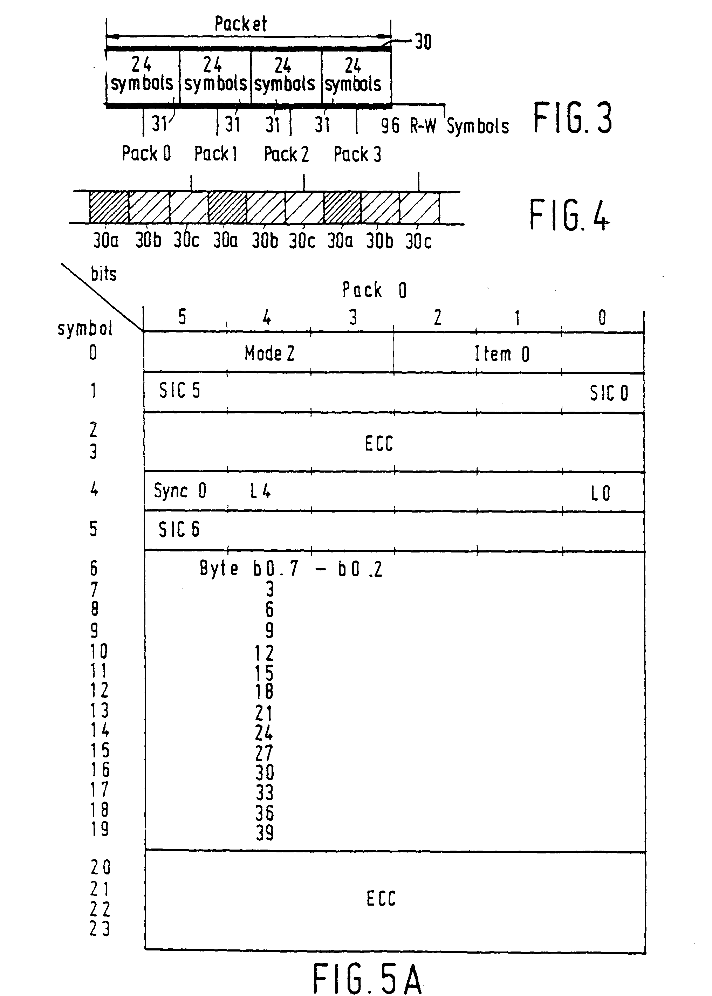

The R- to W-channel bits of each BLOCK form a packet of 96 symbols of each six bits. In Figure 3 such packet is indicated by reference number 30. The packet 30 is divided into 4 packs 31 of 24 symbols each. To each packet 30 a main category code and a sub-category code is assigned indicating the category to which the information of the packet belongs. Packets of different categories are interleaved. The information recorded in the packets may be textual or image information to be displayed on a display device or command codes for controlling the read-out of the information.

Figure 4 shows a sequence of interleaved packets of different categories. The packets of the different categories are indicated with the reference signs 30a, 30b and 30c respectively. The packets of the same main category form a main channel. The packets of the same sub-category within a main channel form a sub-channel.

A use for a main channel could be a choice of language of the textual information to be displayed. A use of the sub-information channel could be the choice of sub-information categories such as the album, track title, track list, artist etc.

The use of channels of different categories enables the selection of the language and the sub-information category to be displayed on a display during the playing of the disc.

Figures 5a to 5d show formats of the packs 0, 1, 2 and 3 respectively suitable for transferring a line of coded text. Symbol 0 of each pack is used to indicate the type of the format. The format shown, indicated by mode 2 item 0, is used for transferring a coded text line of 40 text items. The bits of symbol 1 and bit 5 of symbol 5 of pack 0 and bit 4 of symbol 4 of pack 3 are used to transfer the eight bits (SIC7-SIC0) indicating the sub-information category. The bits (MIC5-MIC0) of symbol 1 of packet 1 are used to indicate the main category. In doing so 64 different main categories can and 256 different sub-information can be selected. The bit 5 of symbol 4 of each pack is used for packet synchronisation. The symbols 2, 3 and 20-33 of each pack are used for error checking and error correction. The symbols 6-19 of pack 0, symbols 6-18 and bits 5 and 4 of symbol 19, symbols 6-18 of pack 2 and symbol 6-18 of pack 3 are used to transfer 40 bytes each indicating a coded text item, e.g. an alphanumerical character. The bits 4-0 (L4-L0) of symbol 4, pack 0 constitute a first text position code indicating the vertical position on which the text line transferred is to be displayed on a display with a first displaying capacity, e.g. a CRT-display with a displaying capacity of 21 text lines. The bits LCD1 en LC0 in symbol 4 of pack 1 constitute a second text position code indiacting the vertical position on which the coded text line is to be displayed on a display with a second displaying capacity, e.g. a two line LCD or LED-display. The use of two different text position codes assigned to the same text line allows the use of two different display types; in case a 21-line display and 2-line display. A 21-line display in the form of a television screen will be normally available when video information is transferred via a CDV-disc. However, in the case that no 21-line display is available the informtion, or parts thereof, can be displayed on the two line display. It is also possible to display different information on the two different displays, e.g. the 2-line display can be used for displaying textual information for indicating the function of so-called soft-keys, whilst the 21-line display is used for displaying the other textual information. When the two different displays are used in this way it can be indicated by the text position line codes L4-L0=00000 and LCD1,LCD0-00 that the coded text line of the packet is not to be displayed on the 21-line display or the 2-line display respectively.

The bits 3-0 of symbol 19 of pack 1, symbol 19 of pack 2 and symbol 19 of pack 3 are used for transferring a two bytes index code for indicating a storing position in a menu memory. The function of the index code will be discussed further in this application. Bit 4 of symbol 5 of pack 2 indicates whether the displaying means are to be switched ON or OFF. The other bits of the packs 0-3 are used for further data for controlling the display of the coded text, e.g. defining a colour, defining a scroll area, defining a display mode for text only, text combined with background video, etc.

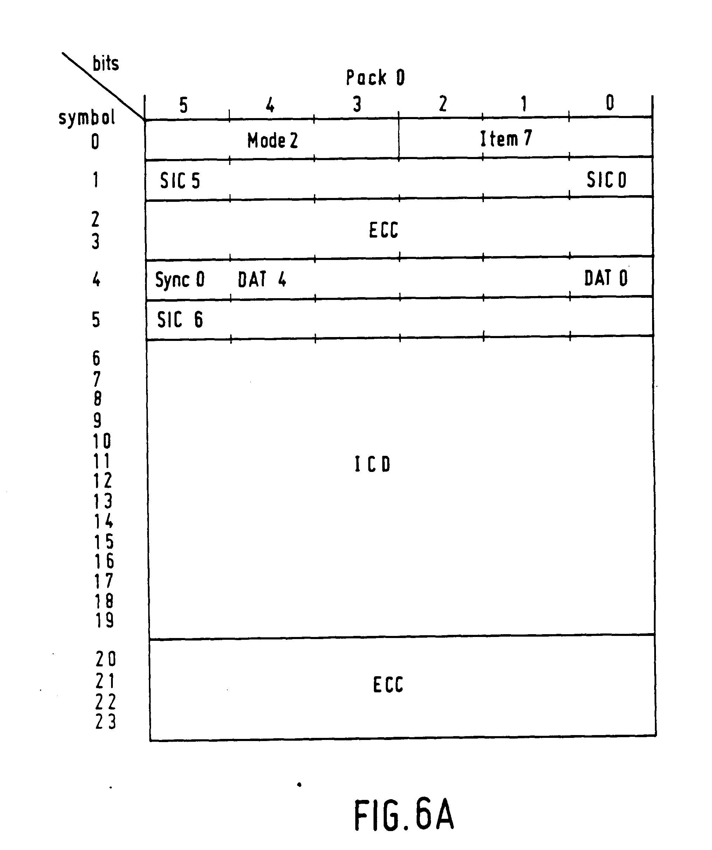

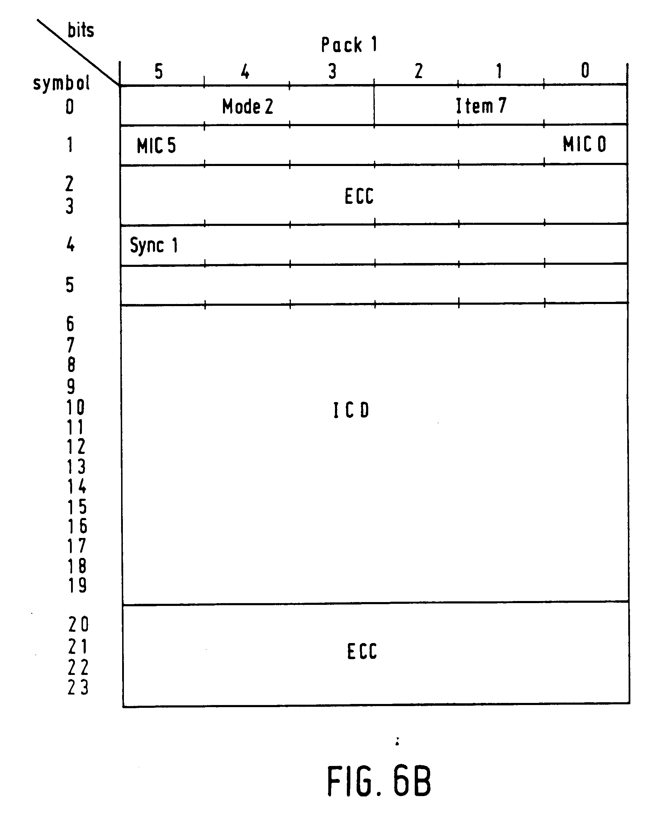

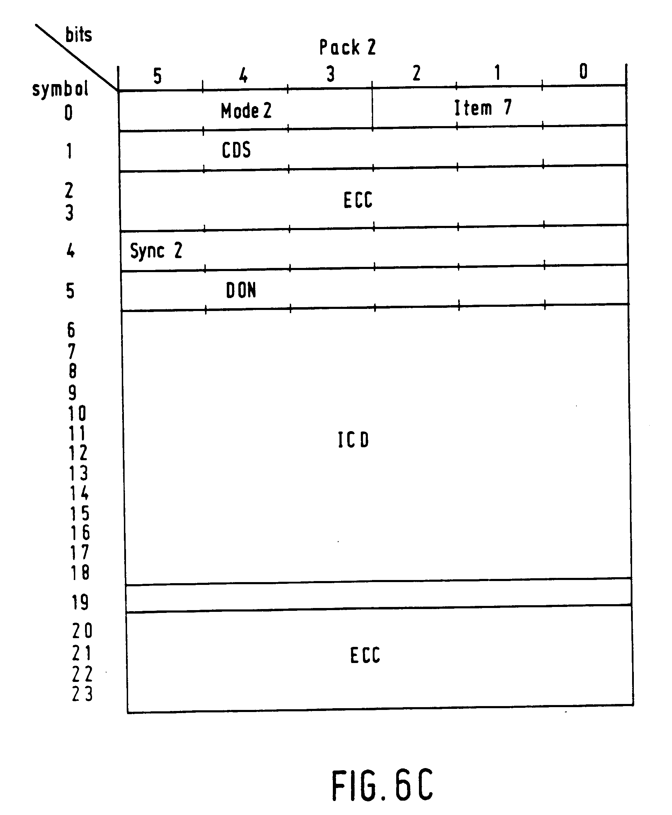

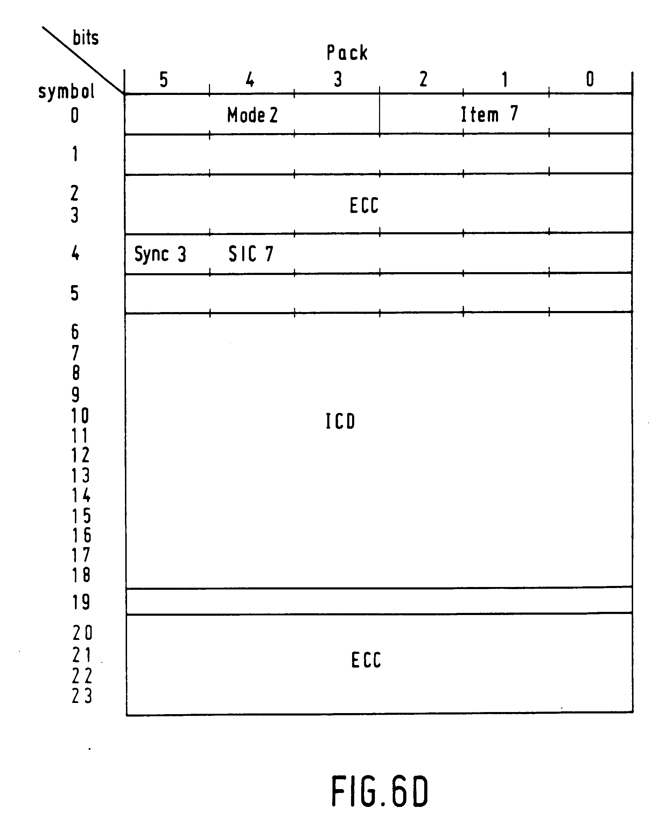

Figures 6a, b, c and d show an example of a format which is suitable for transferring the command codes. The bits used for the indication of the main channel and sub-channel, the error checking and correction, the synchronisation and switching on and off the displaying are the same as in the format shown in Figure 6. The symbols 0 bits 0-2 used for item code of the pack 0-3 are used to indicate the type of format used. By means of a 4-bit code DAT4-DATθ in bits 4-0 of symbol 4 of pack 0 it can be indicated that the packet comprises command codes. The bits used for transferring the command codes are the same as used for transferring the coded text items in the format shown in figure 6. For each command code a group of 7 bytes is transferred, two bytes being used for the two byte index code for indicating the storing position in the menu memory, the other five bytes are used for specifying the command.

The use of packets for transferring coded text and command codes enables interactive control of a play-back apparatus using menu information which transferred to the play-back apparatus via the packets recorded in the R-W subcode channel.

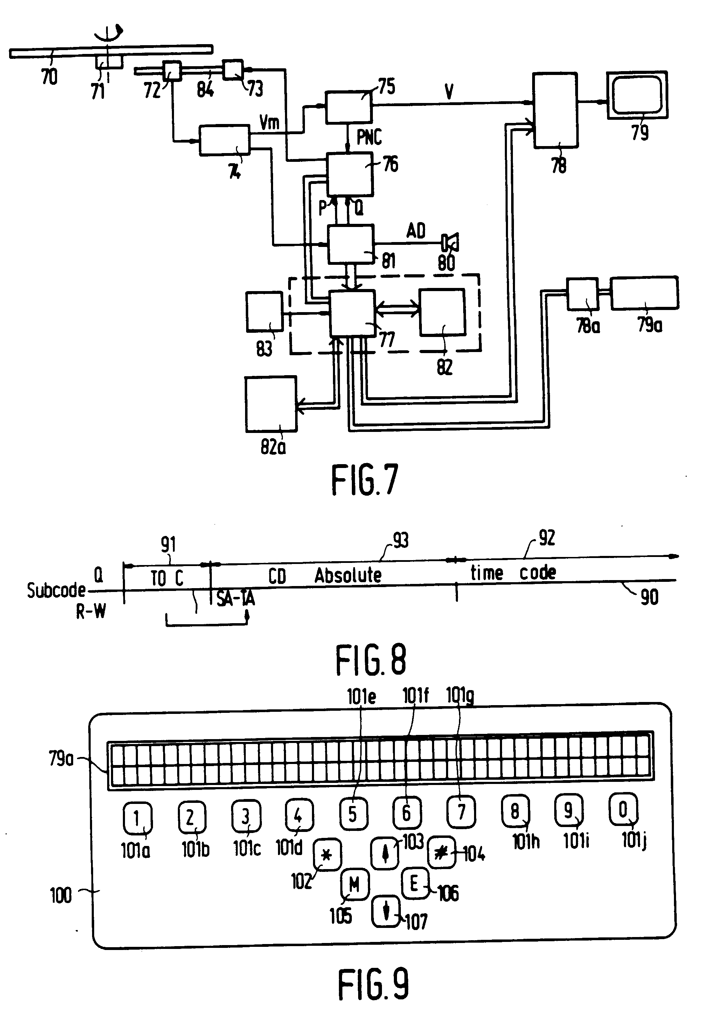

Figure 7 shows an arrangement according to the :.nvention for retrieving the information recorded on an information carrier and which arrangement is provided with a display for displaying textual 5 information recorded in the packets and which is further provided with means for interactively controlling the read out using menu information recorded in the packets. In figure 7 an information carrier is indicated by the reference number 70. On the information carrier 70 a signal is recorded which comprises a CD-Audio signal of which the R to W sub code bits are recorded in the formats as described hereinbefore. Such information carrier may be a CDV-disc on which an FM-modulated video signal and a CD-Audio-signal has been recorded. The disc-shaped information carrier 70 is rotated by a driving motor 71. By means of a reading head 72 the information recorded is read from the disc. The reading head 72 can be 35 moved in radial direction by a radial positioning system, e.g. a motor 73 and spindle 84, under control of a usual control circuit 76 for searching addressed information on the information carrier. The signal read is supplied to a circuit 74 which separates the CD-signal and the FM-modulated video signal.

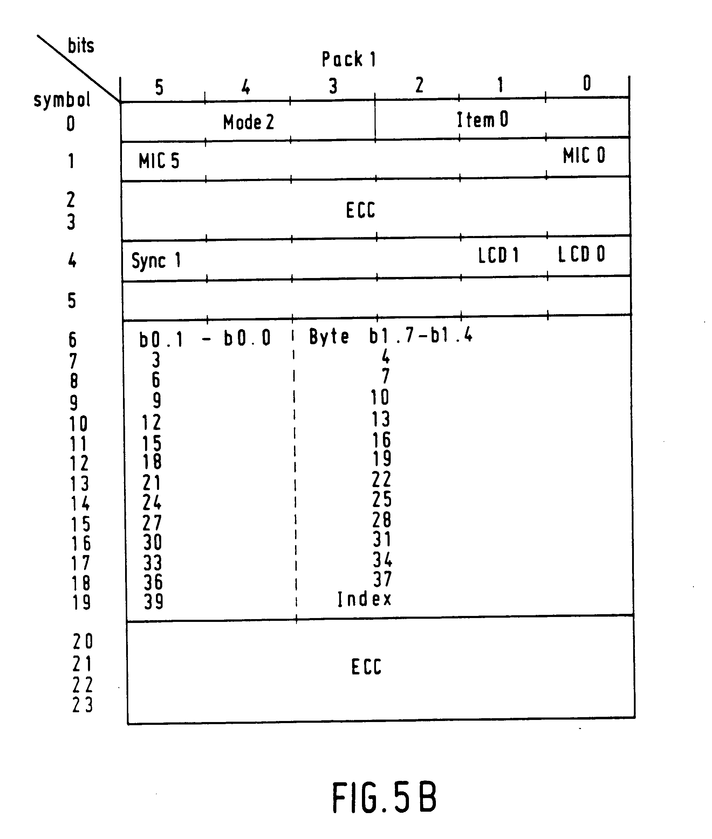

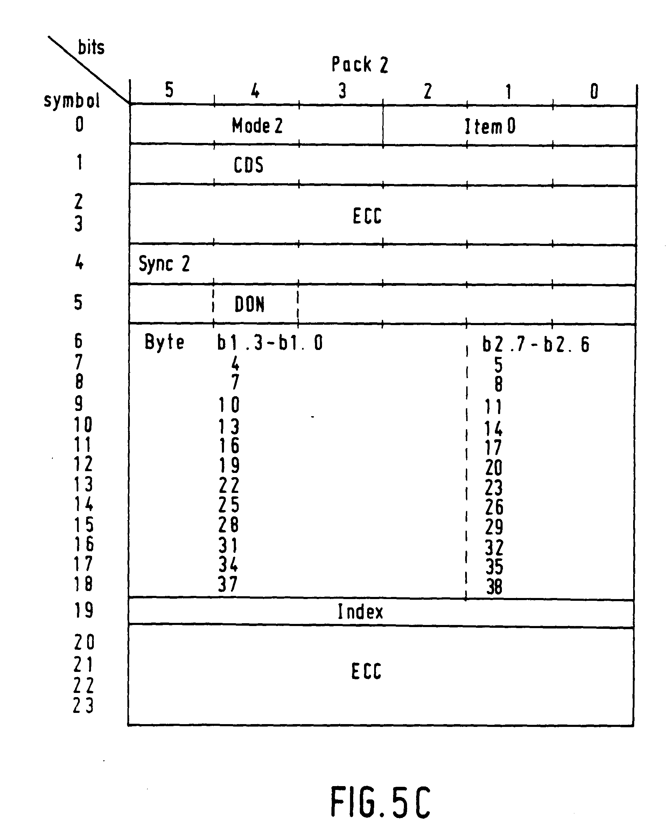

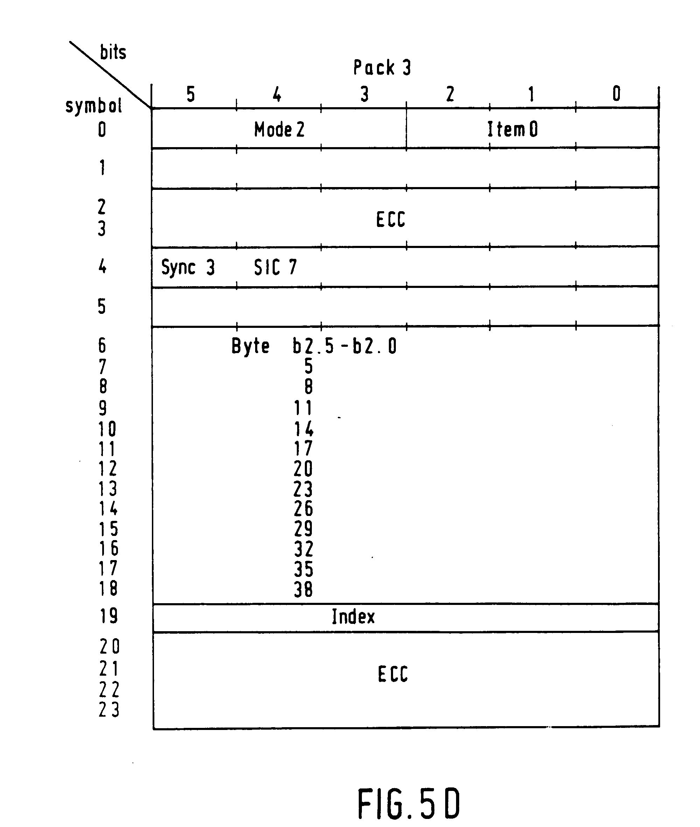

The FM-modulated video signal Vm is supplied to a video processing circuit 75 provided with a FM-demodulator for demodulating the FM-modulated signal into a video signal V, e.g. a PAL or NTSC signal. The video processing circuit 75 further comprises means for separating picture number codes PNC transferred together with the video information. The picture number codes PNC are supplied to the control circuit 76. The CD-signal is supplied to a CD-signal processor 81 for converting the CD-signal in an audio signal AD and separating the P to W sub code signals. The sub code signals R to W are supplied to a sub code signal processing circuit, which may consists of a microcomputer 77 of a known type. The microcomputer 77 is loaded with a program for detecting whether the packets received having the format as described in figures 5 and 6, using the symbols 0 of the packs. Further the main and sub-category codes in the packets are read and compared with codes representing the selected main and sub-category codes. The packets of which the detected category code corresponds with the selected categories are separated and validated. The coded text items and the display control signals of the separated packets are supplied to a converter circuit 78 of usual type for converting the coded text items into video signals for displaying text line on a line position on the display screen as indicated by the text position codes comprised by the control signals. The video signal generated by the video processing circuit 75 is also supplied to the converting circuit 18.

Dependent on the control signals received from the microcomputer 77, the converting circuit 78 will cause
- a combined display of the video information represented by the video signal and the text represented by the coded text items received,
- a display of only the video information,
- a display of only the textual information.

As described before, packets of different main information categories may preferably be used for transferring text information of different languages. The packets of different sub information categories may be used for different types of information, e.g. sub menus, album, track and index title, track title list or the text of lyrics. In doing so the user can choose the type of text information to be displayed and the language in which the text information is to be displayed.

Preferably one main category code is reserved for indicating an override main category and one sub-category code is reserved for indicating an override sub-category. The information in packets with the override main category code and the override sub-category code are always supplied to the converting circuit 78 by the microcomputer 77 by means of bypasing the current selection of the main and sub category. The information in the packets with the override main category code and a sub-category code, not being the override sub-category code, is only supplied to the converting circuit 78 if the sub-category code corresponds with the selected sub information category.

The information in the packets with a main category code, not being the override main category, and the override sub-category is only supplied to the converting circuit 78, if the main category code corresponds with the selected main information category. The use of the override information categories is advantageous in the case that language independent text information is to be displayed, in that case is suffices to record the language independent information only in the override main channel. The use of the override categories is also advantageous in the case that important messages are to be displayed.

In the case that a number of text lines is to be displayed as an integral group of information it is advantageous to use a predetermined bit in the packet indicating the first packet of the group. In the format shown in figures 5 and 6 this is the bit CDS (bit 4 in symbol 1 of packet 2). After changing of a category the start of supplying the information of the packets of the newly selected category is postponed until the CDS bit indicating the beginning of groups of packets is detected. This allows that a group of text lines is always present in sequence with a start from a defined screen position onwards, e.g. top to bottom.

The microcomputer 77 is coupled with a menu memory 82, in which the codes for text lines forming a menu item for interactive control are stored. To each menu text line a command code has to be 5 assigned which is also stored in the menu memory. The microcomputer 77 is loaded with a program for supplying the coded menu text lines to the converter circuit 78, so as to cause a display of the menu on the displaying means 79. Further the microcomputer 77 is coupled with menu selection means 83, for selecting a menu text line displayed. This menu selection means may comprise cursor control keys for moving a cursor displayed on the screen of the displaying means, and a selection key for selecting the menu text line indicated by the cursor. When the user selects the menu text line indicated the corresponding command code is executed.

Table 1 shows an example how the menu information may be stored in the menu memory 82.

**TABLE 1**

| Index Address (Hex) | Packet data 4 Packs of 24 Symbols | Interactive controls (Hex) | |
|---|---|---|---|
| menu 1 | | | |
| 0001 | text line 2 | 21 00 01 00 00 | set main channel 1 |
| 0002 | text line 4 | 21 00 02 00 00 | set main channel 2 |
| 0003 | text line 6 | 21 00 07 04 00 | set main channel 7 & sub-channel 4 |
| 0004 | text line 10 | 22 00 00 00 00 | set display on |
| 0005 | text line 12 | 22 00 00 00 01 | set display off |
| 0006 | text line 16 | 20 00 80 02 00 | go to menu at 0080 cursor at row 2 |
| * | * | * | * |

| menu 2 | | | |
|---|---|---|---|
| 0080 | text line 1 | 00 05 12 00 02 | go to A-Time 5 min., 12 se., frame 0, track 2 |
| 0081 | text line 2 | 40 05 23 01 01 | go to picture index 523 cursor row 01 column 01 |
| 0082 | text line 3 | 21 00 02 03 00 | set main channel 2 & sub-channel 3 |
| 0083 | text line 10 | 20 00 01 00 00 | go to menu at 0001 |
| * | * | * | * |

| menu 3 | | | |
|---|---|---|---|
| 0100 | text line 1 | 00 00 01 03 00 | go to A-Time |
| 0101 | text line 2 | 00 00 02 00 00 | go to A-Time |
| 0102 | text line 3 | 00 00 02 05 00 | go to A-Time |
| 0103 | text line 4 | 40 03 01 21 40 | go to image index 301 cursor row 21 column 40 |
| * | * | * | * |

| menu 4 | | | |
|---|---|---|---|
| 0123 | text line 31 | 20 00 80 00 00 | go to menu memory at 0080 |
| 0124 | text line 31 | 20 01 00 00 00 | go to menu memory at 0100 |
| 0125 | text line 31 | 22 00 00 00 01 | set display off |

The first column at the left indicates the index address of the memory location in which a combination of menu text line and command code are stored. The command codes, comprising five bytes, are indicated in third column. The function to be executed is indicated in the fourth column of the table.

In table 1 the menu information for four different menus are stored; a menu on index addresses 001-006, a menu on index addresses 080-83, a menu in index addresses 0100-0103 and a menu in index addresses 0123-0125.

Four different types of commands are to be distinguished in table 1 in case:
- A first type (the JUMP COMMAND) for initiating a search of informtion recorded on a location on the record carrier indicated by an address comprised by the commande code. This address may be the absolute time code recorded in the subcode Q-channel or the picture number stored together with the video informtion. When the text line corresponding with this type of command is selected, the microcomputer 77 will initiate a search function via the control circuit 76. The control circuit 76 is of usual type which can control the search of the location indicated by the address code. Command codes of this first type are stored in the memory locations indicated by e.g. index addresses 0080 and 0081.
- A second type for causing a display of an other menu indicated by the index address comprised by the command codes. This type of command codes is stored e.g. in the memory locations indicated by index addresses 0006 and 0083.
- A third type for selecting a main and/or sub-category of the packets to be separated from the packet stream received by the microcomputer 77. This type of command codes is stored in the memory locations e.g. indicated by the index addresses 001 and 0082.
- A fourth type for setting the display on and off for displaying the coded text supplied by the microcomputer 77 to the converter circuit 78. This type of command is stored in the memory locations indicated by e.g. the index addresses 004 and 0125. The microcomputer 77 is also loaded with a program for setting on the display in response to the pressing a predetermined key. In doing so the pressing of the said key is detected by the microcomputer and the display is set ON by sending a display SET ON command to the converter circuit 78.

In the example shown in table 1 only four different types of command codes are shown. However, it will be clear for the man skilled in the art that also other types of commands for controlling any type devices by interactive read-out of the information may be used, such as pause-command codes for causing a pause in the playback, a mute command for causing the muting the video and or audio output, of a play command for causing a start of the read out of the information.

The menu information is stored in the R-W subcode channel in formats as shown in Figures 6 and 7 and preferably information is also made visible before starting the playback of the program on the information carrier 70. When the information carrier is a CD or CDV-dic than the menu information may be preferably recorded before the beginning of the first information track; in the R-W channel of the the track prepause (track 01 under 00) between the end of the lead in track and the beginning of the first information track. When the menu information is stored before the first information track, the menu information can be retrieved and loaded in the memory before starting the playback by using the said Jump Command being executed directly after reading the CD-subcode lead-in area which includes a so-called Table of Contents in the subcode Q-channel. For loading the menu information into the menu memory the microcomputer 77 in programmed for detecting the index codes in the packets of the selected main category and storing the coded menu text lines and the corresponding command codes in the addresses indicated by the index code.

Coded text lines and command codes with a predetermined index code, e.g. 00, are not stored in the memory. The command codes with this index codes are directly executed. This allows the executions of a number of commands before the menu information is loaded in the memory, e.g. commands for setting the main and sub-category, initiate the search and reading of the locations in which the menu information is stored with subsequent display of e.g. a menu or a picture, and displaying a main menu after the read-in of the menu information.

Figure 8 shows the locations in which start-up information may preferably be stored in the R-W sub code channel of a CD or CDV-disc. Reference sign 90 indicates a track in which a CD-signal has been recorded. The beginning of the tracks exhibits a lead-in track 91 in which a Table of Contents (TOC) has been recorded in the subcode Q-channel.

The first information track with audio information (track 1/index 1) is indicated by reference sign 92. Between the lead-in track 91 and the first information track 92 a prepause track (track 1/index 0) is situated. In the part of the track 90 situated after the lead-in track an absolute time code indicating an information position (address) is recorded in the subcode Q-channel.

In the R-W subcode channel a Jump Command including an address TA indicating the beginning of the recording of the start-up information, e.g. menu information in R-W subcode channel in the prepause track 93. With the reference signs SA safety distances between the end of the Table of Contents and the beginning of the menu information are indicated. The R to W channel in the first information track (track 1/index 1) may comprise further menu information. When starting the read-out of the track 90 firstly the TOC is read-in and the Jump Command code including the address TA is read from the R-W channel. After the read-in of the Table of Contents has been completed, the Jump Command including the addres TA is executed aid the menu information is read-out and stored in the menu memory. The use of command codes which are directly executed after retrieval allows to invoke a pause function after loading the menu information and displaying a menu or picture. In using the directly executed command codes it is also possible to start with the read out of one of the information tracks without displaying menus. The length of the prepause track 92 corresponds with a playing time of about 2-3 seconds, this means that about 200 menu text lines can be stored in the prepause track 93. However if more menu text lines are to be read in, further menu information can be recorded in te R-W subcode channel in parallel to any part of the main information program. In that case it is preferred to mute the output of audio and video information during the retrieval R-W information via a mute command recorded in the prepause track 93 for muting the output audio information and video information during the read of track 92. Besides a simple and powerful interactive control for CD-player and CDV players the formats of the R to W signal described allows a fast display of additional textual information about the audio or video information recorded in the information carrier itself.

The use of different information categories allows to record textual information of different languages in packets with different main category codes, so that each user can select the language with which he is familiar almost. The use of the different subcategories allows a simple selection of the type of information to be displayed. Since the packets of different categories are interleaved, and the data transfer rate for the information recorded in the R to W signal is high (75 packets per second) the selected type of information in the desired language will be available fast. This high data rate has the advantage that the information of the packets can be repeated several times without loosing perceptible reducing of the access time to the information.

The program of transferring the information via the R to W subcode channels is in particular advantageous for the 5-inch CDV disc on which about 20 minutes audio informatin and 6 minutes video information has been recorded. In the time interval that only the audio information is reproduced information recorded, in the R to W channel can be displayed. A further advantage of the system of the use of the R to W subcode channel for information transfer is that these channels are not commonly used in the present CD audio and CDV discs. This means that the CD audio and CDV disc with information recorded on the R to W subcode channels can read without problems with the prior art CD and CDV disc players.

The arrangement shown in figure 7 may be extended by a two line LCD display 79a which can be controlled by the micrcomputer 77 via a control circuit 78a of an usual type in order to display the text lines with a text position code LCD1, LDCO=01 or 10 indicating the first or second line of the two line display. As said before the text position code LCD0,LCD1=00 is used to indicate that the text line is not to be displayed on the two line display. The text position code LCD1,LCD1=11 force a scroll-up of the information displayed on the two line display 79a, before the new text line is displayed on the lower line.

The arrangement shown in figure 7 may be further extended by a second menu memory 82a of a read-only type, in which menu text lines and corresponding commands are permanently stored in order to enable the hardware dependent control of the arrangement, such as e.g. setting of the output level of the audio signal, the setting of the video displaying system or controlling of additional devices such as tuner, video recorder etc. In order to enable a switching from the menu memory 82 to the menu memory 82a and visa versa in each of the menu memories a selectable command code is stored for changing the menu memory used or a control key provided. The use of the two menu memories in which the menu information is stored in the same format has the advantage that the controlling of the hardware dependent function of the arrangement and the controlling of the interactive retrieval of the information recorded on the information carrier can be done by the user in the same way, which means that a very user friendly user interface is obtained.

Figure 9 shows an embodiment of a remote controller 100 for use in the arrangement shown in figure 7, in which remote controller the two line display 79a and the selection means 83 are included. The keys of the selection means are indicated by the reference signs 101a, ..., 101j and 102-107. Key 105 is a key for invoking the display of a menu when the display has been set in the display switch OFF mode. When already a menu is displayed, actuating of the key 105 cause that the previous menu is displayed. The keys 103 and 107 are used for cursor control in order to move a cursor displayed on the display 79a or 79 to move upwards or downwards. The arrangement is provided with means of usual type for forcing a scroll-up or a scroll-down of the information displayed, if the cursor has reached the upper or lower text line displayed. The key 106 is used as "ENTER"-key for terminating an instruction inserted via the other keys. The keys 101 may be used for selecting menu items from text lines, which are e,g. indicated by a number in the displayed menu or physically combined with the keys 101.

When the keys 101 are used for this selection function it may be preferably to display on the 21-line display the complete menu and on the two line display an indication of the function of key 101 directly above each key, irrespective the cursor position. It may be also advantageous to load the computer 77 with a program for directly inputting the index address of a command code via the remote controller 100. The input of the address can be done by actuating key 104 in order to indicate that an address together with corresponding main and sub category codes for directly addressing a command code is to be inserted and inputting the address by means of the keys 101a-102h. After the direct input of the address code the command represented by the addressed command code is executed. In doing so it may be a problem that the user normally does not know the index addresses of the command codes.

In order to overcome this problem the microcomputer may be provided with a program for displaying the address of a selected menu line or item and thus the address of the corresponding command code. By means of a pressing of key 104 during at least a predetermined time interval, e.g. longer than two seconds, it can be indicated by the user that a display of the address of the selected menu text line is wanted.

In the above embodiment, the present invention has been applied to a CD disc. However the present invention can be applied to other information recording system such as digital audio tape recording systems.

Finally it is remarked that in the above embodiment only coded text and command codes are transferred. However it may be possible to record other information in the packets, such as e.g. compressed picture information, object codes, synthetic speech, etc.

## Claims

1. System for transferring information, using an information carrier (70) on which main information together with sub digital information has been recorded, bits of the sub information forming a sub information channel, the system including means for separating the bits of the sub information channel after reading from the record carrier (70), characterized in that each of said sub information channel packets (30) include at least one category code indicating the type of the of information included in the packet (30), whereby packets with different category codes are interleaved, and whereby packets (30) with a selected category code are separated from the bits read from the information carrier (70).

2. System as claimed in Claim 1, characterized in that the packets (30) comprise a main category code (MIC5-MIC0) indicating the main category to which the information in the corresponding packets (30) belongs, the main category code (MIC5-MIC0) is detected and the packets of which the detected main category code correspond with the main information category are separated.

3. System as claimed in Claim 2, characterized in that besides a main category code (MIC5-MIC0) the packets comprise a sub category code (SIC7-SIC0) indicating a sub category to which the information of the packets (30) belongs, in that combinations of main category code (MIC5-MIC0) and a sub category (SIC7-SIC0) codes are detected in the packets, the packets (30) of which the detected combination of main and sub category code corresponds with the selected main and sub category are separated.

4. System as claimed in Claim 2 or 3, characterized in that a predetermined main category code defines an override function overriding previously selected main category selections.

5. System as claimed in Claim 3 or 4, characterized in that a predetermined sub category code defines an override function overriding previously selected sub category selections.

6. System as claimed in one of the preceding Claims, characterized in that the packets (30) comprise coded text or image information and additional control codes.

7. System as claimed in Claim 6, characterized in that the control codes in the packets (30) comprising coded text or image information comprise position codes (L4-L0; LCD1-LCD6) indicating at which position on a display (79, 79a) this information shall be displayed.

8. System as claimed in Claim 7, characterized in that said control codes comprise text position codes (L4-L0; LCD1-LCD6) for at least two displaying devices (79; 79a) of which the number of lines that can be displayed is different.

9. System as claimed in one of the Claims 6 to 8, characterized in that at leat one packet (30) comprises at least one command code for controlling devices.

10. System as claimed in Claim 9, characterized in that the command codes comprise a display switch ON code and a display switch OFF code for switching ON and switching OFF the display (79, 79a) of the coded information.

11. System as claimed in Claim 9 or 10, characterized in that the command codes comprise category selection codes for selecting the information category of the packets (30) to be separated.

12. System as claimed in one of the Claims 8 to 11, characterized in that the information carrier (70) is provided with address information indicating recording positions of the main information, in that the command cods comprise Jump Command codes for initiating a search of the main information with the address indicated by the said command code.

13. System as claimed in one of the Claims 1 to 12, characterized in that pluralities of packets (30) of the same information category form groups, the beginning of each group being indicated by a start code (CDS), in that after a change of the selected category the separating of the packets (30) with information of the newly selected category is postponed until the detection of a start code (CDS) in the group of packets (30) with the information category newly selected.

14. System as claimed in one of the Claims 6 to 13, characterized in that coded text lines of menus and corresponding command codes are recorded in the packets (30), in that text lines and corresponding command codes of separated packets are loaded in a menu memory (82) menu text lines stored in the menu memories are displayed, a menu text line displayed is selected and, the command code stored in the menu memory (82) and corresponding with the selected menu text line is supplied as a control code to one of the devices.

15. System as claimed in Claim 14, characterized in that the command codes comprise a menu address code for initiating the display of another menu stored in the memory on an address indicated by the menu address code.

16. System as claimed in Claim 14 or 15, characterized in that packets comprise an index code indicating the address of the location at which the coded menu text lines and the corresponding command codes are to be stored in the menu memory.

17. System as claimed in one of the Claims 1 to 16, characterized in that the packets (30) are transferred via the R to W sub code channel of a CD-signal recorded on the information carrier.

18. System as claimed in one of the Claims 12 to 17, characterized in that the information carrier is a CD or CDV-disc with a TABLE OF CONTENTS (TOC) being recorded in a lead-in track (91) preceding the main information tracks in which the main information is recorded and in that in the lead-in track (91) the Jump Command is recorded in the R- W sub code channel.

19. System as claimed in Claim 17, characterized in that the Jump Command recorded in the lead-in track (91) is of a type which indicates a search of packets recorded in a track prepause (93) of a main information track.

20. System as claimed in Claim 19, characterized in that said track prepause (93) is that of the first main information track (track 1, index 1).

21. System as claimed in one of the Claims 1 to 20, characterized in that in the sub information channel the same information is recorded a number of times.

22. Information carrier on which main information together with sub information has been recorded, bits of the sub digital information forming a sub information channel, characterized in that each of said sub information channel packets (30) includes at least one category code indicating the type of information included in the packet, whereby packets with different category codes are interleaved.

23. Information carrier as claimed in Claim 22, characterized in that the packets (30) comprise a main category code (MIC8-MIC0) indicating the main category to which the information in the corresponding packets belongs.

24. Information carrier as claimed in Claim 23, characterized in that the packets comprise a sub category code (SIC7-SIC0) indicating the sub category to which the information of the packet (30) belongs.

25. Information carrier as claimed in Claim 22, 23 or 24, characterized in that the packets (30) comprise coded text or image information and additional control codes.

26. Information carrier as claimed in Claim 25, characterized in that the control codes in packets comprising coded text or image information comprise position codes (L4-L0; LCD1-LCD0) indicating at which position on a display (79; 79a) this information shall be displayed.

27. Information carrier as claimed in Claim 26, characterized in that said control codes (L4-L0; LCD1-LCD0) comprise position codes for at least two displaying devices (79; 79a) of which the number of lines that can be displayed is different.

28. Information carrier as claimed in one of the Claims 25, 26 or 27, characterized in that at least one packet (30) comprises at least one command code for controlling devices.

29. Information carrier as claimed in Claim 28, characterized in that the command codes comprise a display switch ON code and a display switch OFF code for switching ON and switching OFF the display (79; 79a) of the coded information.

30. Information carrier as claimed in Claim 28 or 29, characterized in that the command codes comprise category selection codes for selecting the information category of the packets (30) to be separated.

31. Information carrier as claimed in Claim 27 to 30, characterized in that the information carrier (70) is provided with address information indicating the recording positions of the main information, in that the command codes comprise Jump Command codes for initiating a search of the main information with the address indicated by the said control code.

32. Information carrier as claimed in Claim 22 to 31, characterized in that pluralities of packets of the same information category form groups, the beginning of each group being indicated by a start code (CDS), in that after a change of the selected category the separating of the packets with information the newly selected category is postponed until the detection of a start code (CDS) of the group of packets with the information category newly selected.

33. Information carrier as claimed in Claim 25 to 32, characterized in that coded text lines of menus and corresponding command codes are recorded in the packets (30).

34. Information carrier as claimed in Claim 33, characterized in that the command codes comprise a menu address code for initiating the display of another menu stored in the memory on an address indicate by the menu address code.

35. Information carrier as claimed in Claim 33 or 34, characterized in that packets (30) comprise an index code indicating the address of the location at which the coded menu text lines and the corresponding command codes are to be stored in a menu memory (82).

36. Information carrier as claimed in one of the Claims 22 to 35, characterized in that the packets (30) are recorded in the R to W sub code channel of a CD-signal recorded on the information carrier.

37. Information carrier as claimed in one of the Claims 31 to 36, characterized in that the information carrier is a CD or a CDV-disc with a TABLE OF CONTENTS (TOC) being recorded in a lead-in track (91) preceding the main information tracks in which the main information is recorded and in that in the lead-in track (91) the Jump Command is recorded in the R- W sub code channel.

38. Information carrier as claimed in Claim 37, characterized in that the Jump Command recorded in the lead-in track (91) is of a type which indicates a search of packets recorded in a track prepause (93) of a main information track.

39. Information carrier as claimed in Claim 38, characterized in that said track prepause (93) is that of the first main information track (track 1, index 1).

40. Information carrier as claimed in one of the Claims 22 to 39, characterized in that in the sub information channel the same information is repeated a number of times.

41. Apparatus for use in combination with an information carrier (70), on which main information together with sub information has been recorded, bits of the sub digital information forming a sub information channel, each of sub information channels packets (30) including at least one category code indicating the type of information included in the packet, and packets with different category codes being interleaved, the apparatus being provided with reading means (72, 74, 76) for reading information from the information carrier (70) and means (81) for separating bits of a sub information channel from the infroamtion read, characterized in that the apparatus is provided with selection means (83) for selecting an information category and with means (77) for separating packets of the information category selected from the sub information channel bits separated.

42. Apparatus as claimed in Claim 41, characterized in that the separating means (77) comprise category code detecting means for detecting a main category code in the packets (30), the separating means (77) being arranged to separate the packets of which the detected main category code corresponds with the main information category separated.

43. Apparatus as claimed in Claim 42, characterized in that the detecting means are arranged to detect combinations of a main category code and a sub category code in the packets, the separating means (77) being arranged to separate the packets (30) of which the detected combination of main and sub category code corresponds with the selected main and sub category.

44. Apparatus as claimed in Claim 42 or 43, characterized in that the apparatus is provided with means for detecting the presence of a predetermined category code in the packets and in that the separating means (77) are adapted to separate the packets with the said predetermined main category code, irrespective the selected main category code.

45. Apparatus as claimed in Claim 42, 43 or 44, characterized in that the apparatus is provided with means for detecting the presence of a predetermined sub category code in the packets, and in that the separating means (77) are adapted to separate the packets with the said predetermined sub category code, irrespective the selected sub category.

46. Apparatus as claimed in one of the Claims 41 to 45, characterized in that the apparatus comprises at least one displaying (79; 79a) device for displaying the coded text or image information on a displaying position indicated by the position codes, transferred via the separated packets (30).

47. Apparatus as claimed in one of the Claims 41 to 46, characterized in that the apparatus is provided with devices which are controllable via control signals supplied to them, the apparatus being further characterized by means for supplying control signals to the controllable device in response to command codes transferred to the apparatus via the packets (30) separated.

48. Apparatus as claimed in Claim 47, characterized in by means (77) of switching ON and switching OFF the display of information in response to a display ON and display OFF command code respectively.

49. Apparatus as claimed in Claim 47 of 48, characterized in that the separating means (77) are of the type in which information category of the packets (30) to be selected can be set by means of the category selection codes transferred to the arrangement via the packets (30) separated.

50. Apparatus as claimed in one of the Claims 48, 49 or 50, characterized in that the reading means are provided with means for searching main information recorded on a position indicated by an address, and in that the arrangement is provided with means for supplying a control code to the search means in response to a Jump Command code transferred via the packets separated in order to indicate the search of the information indicated by an address included by the said control code

51. Apparatus as claimed in one of the Claims 48 to 50, characterized in that the separating means being arranged to start separating in response to the detection of a start code indicating the beginning of a group of packets with the information selected.

52. Apparatus as claimed in one of the Claims 48 to 51, characterized in that the arrangement comprises a menu memory and means for loading menu lines and corresponding command codes of separated packets in the menu memory.

53. Apparatus as claimed in Claim 52, characterized by means for supplying coded menu text lines stored in the menu memory to the displaying means, means for selecting a menu text line displayed by the displaying means, means for supplying the command code stored in the memory and corresponding with the selected menu text line to control devices for controlling the arrangement.

54. Apparatus as claimed in Claim 52 or 53, characterized by manually actuable input means for directly invoking a command code stored in the menu memory.

55. Apparatus as claimed in Claim 54, characterized by an manually actuable means for retrieving the address in the menu memory at 5 which a selected menu line is stored.

56. Apparatus as claimed in one of the Claims 52, 53 or 54, characterized in that the arrangement is provided with a second menu memory of a read only type in which menu information is stored in a similar way as in the first menu memory, the arrangement is further provided with selection means for selecting from which of the two menu memories menu text lines are to be displayed.

## Patentansprüche

1. Informationsüberwagungssystem mit einem Informationsträger (70), auf dem zusammen mit digitaler Subinformation Hauptinformation aufgezeichnet ist, wobei Bits der Subinformation einen Subinformationskanal bilden, wobei das System Mittel aufweist zum Trennen der Bits des Subinformationskanals nach dem Auslesen des Aufzeichnungsträgers (70), dadurch gekennzeichnet, daß jedes der genannten Subinformationskanalpakete (30) wenigstens einen Kategoriecode aufweist, der die Kategorie der Information in dem Paket (30) angibt, wobei Pakete mit verschiedenen Kategoriecodes verschachtelt sind, und wobei Pakete (30) mit einem selektierten Kategoriecode von den Bits getrennt werden, die aus dem Informationsträger (70) ausgelesen wurden.

2. System nach Anspruch 1, dadurch gekennzeichnet, daß die Pakete (30) einen Hauptkategoriecode (MIC5-MIC0) aufweisen, der die Hauptkategorie angibt, zu der die Information in den entsprechenden Paketen (30) gehört, wobei der Hauptkategoriecode (MIC5-MIC0) detektiert wird und wobei diejenigen Pakete, deren detektierter Hauptkategoriecode der Hauptinformationskategorie entspricht, getrennt werden.

3. System nach Anspruch 2, dadurch gekennzeichnet, daß die Pakete außer einem Hauptkategoriecode (MIC5-MIC0) einen Subkategoriecode (SIC7-SIC0) aufweisen, der eine Subkategorie bezeichnet, zu der die Information der Pakete (30) gehört, daß Kombinationen aus Hauptkategoriecodes (MIC5-MIC0) und Subkategoriecodes (SIC7-SIC0) in den Paketen detektiert werden, die Pakete (30), deren detektierte Kombination von Haupt- und Subkategoriecode der selektierten Haupt- und Subkategorie entspricht, getrennt werden.

4. System nach Anspruch 2 oder 3, dadurch gekennzeichnet, daß ein vorbestimmter Hauptkategoriecode eine Ausschaltfunktion definiert, die vorher selektierte Hauptkategorieselektionen ausschaltet.

5. System nach Anspruch 3 oder 4, dadurch gekennzeichnet, daß ein vorbestimmter Subkategoriecode eine Ausschaltfunktion definiert, die vorher selektierte Subkategorieselektionen ausschaltet.

6. System nach einem der vorstehenden Ansprüche, dadurch gekennzeichnet, daß die Pakete (30) codierte Text- oder Bildinformation und msätzliche Steuercodes enthalten.

7. System nach Anspruch 6, dadurch gekennzeichnet, daß die Steuercodes in den Paketen (30) mit codierter Text- oder Bildinformation Positionscodes (L4-L0; LCD1-LCD6) aufweisen, die angeben, an welchen Stellen an einem Display (79, 79a) diese Information wiedergegeben werden soll.

8. System nach Anspruch 7, dadurch gekennzeichnet, daß die genannten Steuercodes Textpositionscodes (L4-L0; LCD1-LCD6) für wenigstens zwei Wiedergabeeinrichtungen (79, 79a) aufweisen, wobei die Anzahl wiederzugebender Zeilen verschieden ist.

9. System nach einem der Ansprüche 6 bis 8, dadurch gekennzeichnet, daß wenigstens ein Paket (30) wenigstens einen Befehlscode für Steuereinrichtungen aufweist.

10. System nach Anspruch 9, dadurch gekennzeichnet, daß die Befehlscodes einen Wiedergabe-Einschalt-Code und einen Wiedergabe-Aus-schaltcode aufweist zum Einschalten bzw. Ausschalten des Displays (79, 79a) für codierte Information.

11. System nach Anspruch 9 oder 10, dadurch gekennzeichnet, daß die Steuercodes Kategorieslektionscodes enthalten zum Selektieren der Informationskategorie der zu trennenden Pakete (30).

12. System nach einem der Ansprüche 8 bis 11, dadurch gekennzeichnet, daß der Informationsträger (70) mit Adresseninformation versehen ist, die Aufzeichnungs-stellen der Hauptinformation angibt, daß die Befehlscodes Sprungbefehlscodes aufweisen zum Herbeiführen einer Suche der hauptinformation mit der von dem genannten Befehlscode angegebenen Adresse.

13. System nach einem der Ansprüche 1 bis 12, dadurch gekennzeichnet, daß viele Pakete (30) derselben Informationskategorie Gruppen bilden, wobei der Anfang jeder Gruppe durch einen Startcode CDS) angegeben wird, daß nach einer Änderung der selektierten Kategorie die Trennung der Pakete (30) mit Information der neu selektierten Kategorie aufgehoben wird, bis zur Detektion eines Startcodes (CDS) der Paketgruppe (30) mit der neu selektierten Informationskategorie.

14. System nach einem der Ansprüche 6 bis 13, dadurch gekennzeichnet, daß codierte Textzeilen von Menüs und entsprechende Befehlscodes in den Paketen (30) aufgezeichnet werden, daß Textzeilen und entsprechende Befehlscodes getrennter Pakete in einem Menüspeicher (82) geladen werden, in dem Menüspeicher gespeicherte Menütextzeilen wiedergegeben werden, eine wiedergegebene Menütextzeile selektiert wird und, der in dem Menüspeicher (82) gespeicherte und der selektierten Menütextzeile entsprechende Befehlscode einer der Einrichtungen als Steuercode zugeführt wird.

15. System nach Anspruch 14, dadurch gekennzeichnet, daß die Befehlscodes eine Menüadresse aufweisen zum Durchführen der Wiedergabe eines anderen in dem Speicher an einer durch den Menüadressencode bezeichneten Adresse gespeicherten Menüs.

16. System nach Anspruch 14 oder 15, dadurch gekennzeichnet, daß Pakete einen Indexcode aufweisen, der die Adresse der Stelle angibt, an der die codierten Menütextzeilen und die entsprechenden Befehlscodes in dem Menüspeicher gespeichert werden müssen.

17. System nach einem der Ansprüche 1 bis 16, dadurch gekennzeichnet, daß die Pakete (30) über den R-W-Subcodekanal eines auf dem Informationsträger aufgezeichneten CD-Signals übertragen werden.

18. System nach einem der Ansprüche 12 bis 17, dadurch gekennzeichnet, daß der Informationsträger eine CD- oder eine CDV-Scheibe ist mit einer "TABLE OF CONTENTS" (TOC) (Inhaltstafel), aufgezeichnet in einer Einführungsspur (91) vor den Hauptinformationsspuren, in denen die Hauptinformation aufgezeichnet ist, und daß in der Einführungsspur (91) in dem R-W-Subcodekanal ein Sprungbefehl aufgezeichnet ist.

19. System nach Anspruch 17, dadurch gekennzeichnet, daß der in der Einführungsspur (91) aufgezeichnete Sprungbefehl von einem Typ ist, der eine Suche nach Paketen angibt, die in einer Spurvorpause (93) einer Hauptinformationsspur aufgezeichnet sind.

20. System nach Anspruch 19, dadurch gekennzeichnet, daß die genannte Spurvorpause (93) die der ersten Hauptinformationsspur )Spur 1, Index 1) ist.

21. System nach einem der Ansprüche 1 bis 20, dadurch gekennzeichnet, daß in dem Subinformationskanal dieselbe Information einige Male gespeichert ist.

22. Informationsträger, auf dem Hauptinformation zusammen mit Subinformation aufgezeichnet ist, wobei Bits der digitalen Subinformation einen Subinformationskanal bilden, dadurch gekennzeichnet, daß jedes der genannten Subinformationskanalpakete (30) wenigstens einen Kategoriecode aufweist, der die Kategorie der Information in dem Paket angibt, wobei Pakete mit verschiedenen Kategoriecodes verschachtelt sind.

23. Informationsträger nach Anspruch 22, dadurch gekennzeichnet, daß die Pakete (30) einen Hauptkategoriecode (MIC8-MIC0) aufweisen, der die Hauptkategorie angibt, zu der die Information in den entsprechenden Paketen gehört.

24. Informationsträger nach Anspruch 23, dadurch gekennzeichnet, daß die Pakete einen Subkategoriecode (SIC7-SIC0) aufweisen, der die Subkategorie angibt, zu der die Information des Paketes (30) gehört.

25. Informationsträger nach Anspruch 22, 23 oder 24, dadurch gekennzeichnet, daß die Pakete (30) codierte Text- oder Bildinformation und zusätzliche Steuercodes aufweisen.

26. Informationsträger nach Anspruch 25, dadurch gekennzeichnet, daß die Steuercodes in den Paketen mit codierter Text- oder Bildinformation Positionscodes (L4-L0; LCD1-LCD0) aufweisen, die angeben, an welcher Stelle am Display (79, 79a) diese Information wiedergegeben werden soll.

27. Informationsträger nach Anspruch 26, dadurch gekennzeichnet, daß die genannten Steuercodes (L4-L0; LCD1-LCD0) Positionscodes für wenigstens zwei Wiedergabeeinrichtungen (79, 79a) aufweist, wobei die Anzahl wiederzugebender Zeilen verschieden ist.

28. Informationsträger nach einem der Ansprüche 25, 26 oder 27, dadurch gekennzeichnet, daß wenigstens ein Paket (30) wenigstens einen Befehlscode zur Steuerung von Einrichtungen aufweist.

29. Informationsträger nach Anspruch 28, dadurch gekennzeichnet, daß die Befehlscodes einen Display-Einschaltcode und einen Display-Ausschaltcode aufweist zum Ein- und Ausschalten des Displays (79,79a) der codierten Information.

30. Informationsträger nach Anspruch 28 oder 29, dadurch gekennzeichnet, daß die Befehlscodes Kategorieselektionscodes aufweisen zum Selektieren der Informationskategorie der zu trennenden Pakete (30).

31. Informationsträger nach Anspruch 27 oder 30, dadurch gekennzeichnet, daß der Informationsträger (70) mit Adresseninformation versehen ist, welche die Aufzeichnungsstellen der Hauptinformation angibt, daß die Befehlscodes Sprungbefehlscodes aufweisen zum Herbeiführen einer Suche nach der Hauptinformation mit der durch den genannten Steuercode bezeichneten Adresse.

32. Informationsträger nach Anspruch 22 bis 31, dadurch gekennzeichnet, daß viele Pakete derselben Informationskategorie Gruppen bilden, wobei der Anfang jeder Gruppe durch einen Startcode (CDS) angegeben ist, daß nach einer Änderung der selektierten Kategorie das Trennen der Pakete mit Information der neu selektierten Kategorie aufgehoben wird, bis zur Detektion eines Startcodes (CDS) der Gruppe mit Paketen mit der neu selektierten Informationskategorie.

33. Informationsträger nach Anspruch 25 bis 32, dadurch gekennzeichnet, daß codierte Textzeilen von menüs und entsprechende Befehlscodes in den Paketen (30) aufgezeichnet werden.

34. Informationsträger nach Anspruch 33, dadurch gekennzeichnet, daß die Befehlscodes einen Menüadressencode aufweisen zum Herbeiführen der Wiedergabe eines anderen in dem Speicher an einer Adresse gespeicherten Menüs, wobei diese Adresse durch den Menüadressencode angegeben wird.

35. Informationsträger nach Anspruch 33 oder 34, dadurch gekennzeichnet, daß Pakete (30) einen Indexcode aufweisen, der die Adresse derjenigen Stelle angibt, an der die codierten Menütextzeilen und die entsprechenden Befehlscodes in einem Menüspeicher (82) gespeichert werden müssen.

36. Informationsträger nach einem der Ansprüche 22 bis 35, dadurch gekennzeichnet, daß die Pakete (30) in dem R-W-Subcodekanal eines auf dem Informationsträger aufgezeichneten CD-Signals aufgezeichnet werden.

37. Informationsträger nach einem der Ansprüche 31 bis 36, dadurch gekennzeichnet, daß der Informationsträger eine CD oder eine CDV mit einer Inhaltstafel (TOC) ist, die in der Einführungsspur (91) vor den Hauptinformationsspuren, in denen die Hauptinformation aufgezeichnet ist, aufgezeichnet ist, und daß in der Einfuhrungsspur (91) der Sprungbefehl in dem R-W-Subcodekanal aufgezeichnet ist.

38. Informationsträger nach Anspruch 37, dadurch gekennzeichnet, daß der in der Einführungsspur (91) aufgezeichnete Sprungbefehl von einem Typ ist, der eine Suche nach Paketen aufgezeichnet in einer Spurvorpause (93) einer Hauptinformationsspur angibt.

39. Informationsträger nach Anspruch 38, dadurch gekennzeichnet, daß die genannte Spurvorpause (93) die der ersten Hauptinformationsspur ist (Spur 1, Index 1).

40. Informationsträger nach einem der Ansprüche 22 bis 39, dadurch gekennzeichnet, daß in dem Subinformationskanal dieselbe Information einige Male wiederholt wird.

41. Einrichtung zum Gebrauch in Kombination mit einem Informationsträger (70), auf dem Hauptinformation zusammen mit Subinformation aufgezeichnet ist, wobei Bits der digitalen Subinformation einen Subinformationskanal bilden, wobei jedes der Kanalpakete (30) wenigstens einen Kategoriecode aufweist, der die Informationsart in dem Paket angibt, und wobei Pakete mit verschiedenen Kategoriecodes verschachtelt sind, wobei die Einrichtung mit Auslesemitteln (72, 74, 76) versehen ist zum Auslesen von Information aus dem Informationsträger (70) und Mittel (81) zum Trennen von Bits eines Subinformationskanals von der ausgelesenen Information, dadurch gekennzeichnet, daß die Einrichtung mit Selektionsmitteln (83) versehen ist zum Selektieren einer Informationskategorie, sowie mit Mitteln (77) zum Trennen von Paketen der von den getrennten Subinformationskanalbits getrennten Informationskategorie.

42. Einrichtung nach Anspruch 41, dadurch gekennzeichnet, daß die Trennmittel (77) Kategoriecodedetektionsmittel aufweist zum Detektieren eines Hauptkategoriecodes in den Paketen (30), wobei die Trennmittel (77) dazu vorgesehen sind, diejenigen Pakete zu trennen, deren detektierter Hauptkategoriecode dr abgetrennten Hauptinformationskategorie entspricht.

43. Einrichtung nach Anspruch 42, dadurch gekennzeichnet, daß die Detektionsmittel dazu vorgesehen sind, Kombinationen eines Hauptkategoriecodes und eines Subkategoriecodes in den Paketen zu detektieren, wobei die Trennmittel (77) dazu vorgesehen sind, diejenigen Pakete (30) zu trennen, deren detektierte Kombination von Haupt- und Subkategoriecode der selektierten Haupt- und Subkategorie entspricht.

44. Einrichtung nach Anspruch 42 oder 43, dadurch gekennzeichnet, daß sie mit Mitteln zum Detektieren des Vorhandenseins eines vorbestimmten Kategoriecodes in den Paketen versehen ist und daß die Trennmittel (77) die Pakete mit dem genannten vorbestimmten Hauptkategoriecode trennen, und zwar unabhängig von dem selektierten Hauptkategoriecode.

45. Einrichtung nach Anspruch 42, 43 oder 44, dadurch gekennzeichnet, daß sie mit Mitteln zum Detektieren des Vorhandenseins eines vorbestimmten Subkategoriecodes in den Paketen, und daß die Trennmittel (77) die Pakete mit dem genannten vorbestimmten Subkategoriecode trennen, unabhängig von dem selektierten Subkategoriecode.

46. Einrichtung nach einem der Ansprüche 41 bis 45, dadurch gekennzeichnet, daß sie wenigstens eine Wiedergabeeinrichtung (79; 79a) aufweist zum Wiedergeben der codierten Text- oder Bildinformation an einer Wiedergabestelle, angegeben durch die Positionscodes, übertragen über die abgetrennten Pakete (30).

47. Einrichtung nach einem der Ansprüche 41 bis 46, dadurch gekennzeichnet, daß sie mit Anordnungen versehen ist, die mittels denselben zugeführter Steuersignale steuerbar sind, wobei die Einrichtung weiterhin gekennzeichnet ist durch Mittel zum Liefern von Steuersignalen zu der steuerbaren Anordnung in Antwort auf zu der Einrichtung über die abgetrennten Pakete (30) übertragene Befehlscodes.

48. Einrichtung nach Anspruch 47, gekennzeichnet durch Mittel (77) zum Einschalten und Ausschalten der Wiedergabe von Information in Antwort auf einen Wiedergabe-Einschaltbefehlscode bzw. Wiedergabe-Ausschaltbefehlscode.

49. Einrichtung nach Anspruch 47 oder 48, dadurch gekennzeichnet, daß die Trennmittel (77) von dem Typ sind, bei dem die Informationskategorie der zu selektieren den Pakete (30) mittels der der Einrichtung über die abgetrennten Pakete (30) übertragenen Kategorieselektionscodes eingestellt werden kann.

50. Einrichtung nach einem der Ansprüche 48 oder 49, dadurch gekennzeichnet, daß die Auslesemittel mit Mitteln zum Suchen van Hauptinformation, aufgezeichnet an einer Stelle, die durch eine Adresse angegeben ist, versehen sind und daß die Einrichtung mit Mitteln versehen ist zum Liefern eines Steuercodes zu den Suchmitteln in Antwort auf einen Sprungbefchlscode, der über die abgetrennten Pakete übertragen worden ist, und die Suche der Information anzugeben, die durch eine Adresse in dem genannten Steuercode angegeben ist.

51. Einrichtung nach einem der Ansprüche 48 bis 50, dadurch gekennzeichnet, daß die Trennmittel vorgesehen sind zum Starten der Trennung in Antwort auf die Detektion eines Startcodes, der den Anfang einer Gruppe von Paketen mit der selektierten Information angibt.

52. Einrichtung nach einem der Ansprüche 48 bis 51, dadurch gekennzeichnet, daß sie einen Menü speicher und Mittel aufweist zum Laden von Menüzeilen und entsprechenden Befehlscodes der abgetrennten Paketen in dem Menüspeicher.

53. Einrichtung nach Anspruch 52, gekennzeichnet durch Mittel zum Liefern codierter Menütextzeilen, die in dem Menüspeicher gespeichert sind, zu den Wiedergabemitteln, durch Mittel zum Selektieren einer von den Wiedergabemitteln wiedergegebenen Menütextzeile, durch Mittel zum Liefern des in dem Speicher gespeicherten Befehlscodes entsprechend der selektierten Menütextzeile zu den Steueranordnungen zur Steuerung der Einrichtung.

54. Einrichtung nach Anspruch 52 oder 53, gekennzeichnet durch handmäßig betätigbare Mittel zum unmittelbaren Aufrufen eines Befehlscodes in dem Menüspeicher.

55. Einrichtung nach Anspruch 54, gekennzeichnet durch ein handmäßig betätigbares Mittel zum Suchen der Adresse in dem Menüspeicher, an der eine selektierte Menüzeile gespeichert ist.

56. Einrichtung nach einem der Ansprüche 52, 53 oder 54, dadurch gekennzeichnet, daß sie mit einem zweiten Menüspeicher vom ROM-Typ versehen ist, in dem Menü-Information auf ähnliche Weise gespeichert ist wie in dem ersten Menüspeicher, wobei die Einrichtung weiterhin mit Selektionsmitteln versehen ist um zu Selektieren, von welchem der beiden Menüspeicher Menütextzeilen wiedergegeben werden müssen.

## Revendications

1. Système pour le transfert d'informations, utilisant un support d'information (70) sur lequel une information principale de concert avec une sous-information numérique a été enregistrée, des bits de la sous-information formant un canal de sous-information, le système comprenant des moyens pour séparer les bits du canal de sous-information après lecture du support d'enregistrement (70), caractérisé en ce que chaque paquet (30) de canaux de sous-information comprend au moins une catégorie de code indiquant le type de l'information comprise dans le paquet (30), des paquets de codes de catégories différentes étant entrelacés, et des paquets (30) présentant un code de catégorie sélectionnée étant séparés des bits lus à partir du support d'information (70).

2. Système suivant la revendication 1, caractérisé en ce que les paquets (30) comprennent un code de catégorie principale (MIC5-MIC0) indiquant la catégorie principale à laquelle l'information dans les paquets correspondants (30) appartient, que le code de catégorie principale (MIC5-MIC0) est détecté et que les paquets dont le code de catégorie principale détecté correspond à la catégorie d'information principale sont séparés.

3. Système suivant la revendication 2, caractérisé en ce que, outre un code de catégorie principale (MIC5-MIC0), les paquets comprennent un code de sous-catégorie (SIC7-SIC0) indiquant une sous-catégorie à laquelle l'information des paquets (30) appartient, en ce que des combinaisons de codes de catégories principales (MIC5-MIC0) et des codes de sous-catégories (SIC7-SIC0) sont détectés dans les paquets, les paquets (30) dont la combinaison détectée de codes de catégorie principale et de sous-catégorie correspond à la catégorie principale sélectionnée et à la sous-catégorie étant séparés.

4. Système suivant la revendication 2 ou 3, caractérisé en ce qu'un code de 5 catégorie principal prédéterminé définit une fonction prioritaire superposant des sélections de catégories principales sélectionnées antérieurement.

5. Système suivant la revendication 3 ou 4, caractérisé en ce qu'un code de sous-catégorie prédéterminé définit une fonction prioritaire superposant des sélections de sous-catégories sélectionnées antérieurement.

6. Système suivant l'une quelconque des revendications précédentes, caractérisé en ce que les paquets (30) comprennent un texte codé ou une information d'image et des codes de commande supplémentaires.

7. Système suivant la revendication 6, caractérisé en ce que les codes de commande dans les paquets (30) comprenant du texte codé ou de l'information d'image comprennent des codes de position (L4-L0; LCD1-LCD6) indiquant à quelle position sur l'affichage (79, 79a) cette information sera affichée.

8. Système suivant la revendication 7, caractérisé en ce que lesdits codes de commande comprennent des codes de position de texte (L4-L0; LCD1-LCD6) pour au moins deux dispositifs d'affichage (79; 79a) dont le nombre de lignes pouvant être affichées est différent.

9. Système suivant l'une quelconque des revendications 6 à 8, caractérisé en ce qu'au moins un paquet (30) comprend au moins un code de commande pour commander des dispositifs.

10. Système suivant la revendication 9, caractérisé en ce que les codes de commande comprennent un code de commutation d'affichage MARCHE et un code de commutation d'affichage ARRET destinés à commuter en MARCHE ou en ARRET l'affichage (79, 79a) de l'information codée.

11. Système suivant l'une des revendications 9 ou 10, caractérisé en ce que les codes de commande comprennent des codes de sélection de catégories destinés à sélectionner la catégorie d'information des paquets (30) à séparer.

12. Système suivant l'une quelconque des revendications 8 à 11, caractérisé en ce que le support d'information (70) est pourvu d'information d'adresse indiquant les positions d'enregistrement de l'information principale, en ce que les codes de commande comprennent des codes de Commande de Saut destinés à amorcer une recherche de l'information principale présentant l'adresse indiquée par ledit code de commande.

13. Système suivant l'une quelconque des revendications 1 à 12, caractérisé en ce que plusieurs paquets (30) de la même catégorie d'information forment des groupes, le début de chaque groupe étant indiqué par un code de départ (CDS), en ce qu'après un changement de la catégorie sélectionnée, la séparation des paquets (30) présentant l'information de la catégorie nouvellement sélectionnée est postposée jusqu'à la détection d'un code de départ (CDS) dans le groupe de paquets (30) présentant la catégorie d'information nouvellement sélectionnée.

14. Système suivant l'une quelconque des revendications 6 à 13, caractérisé en ce que des lignes de texte codé de menus et des codes de commande correspondants sont enregistrées dans les paquets (30), en ce que des lignes de texte et des codes de commande correspondantes de paquets séparés sont chargées dans une mémoire de menu (82), des lignes de texte de menus stockées dans les mémoires de menus sont affichées, une ligne de texte de menu affichée est sélectionnée et, le code de commande stocké dans la mémoire de menu (82) et correspondant à la ligne de texte de menu sélectionnée est amené en tant que code de commande à l'un des dispositifs.

15. Système suivant la revendication 14, caractérisé en ce que les codes de commande comprennent un code d'adresse de menu destiné à amorcer l'affichage d'un autre menu stocké dans la mémoire sur une adresse indiquée par le code d'adresse de menu.

16. Système suivant la revendication 14 ou 15, caractérisé en ce que des paquets comprennent un code d'index indiquant l'adresse de l'emplacement auquel les lignes de texte de menus de code et les codes de commande correspondants doivent être stockés dans la mémoire de menu.

17. Système suivant l'une quelconque des revendications 1 à 16, caractérisé en ce que les paquets (30) sont transférés par l'intermédiaire des canaux de sous-code R à W d'un signal CD enregistré sur le support d'information.

18. Système suivant l'une quelconque des revendications 12 à 17, caractérisé en ce que le support d'information est un disque CD ou CDV possédant une TABLE DES MATIERES (TOC) étant enregistrée dans une piste d'introduction (91) précédant les pistes d'information principale dans lesquelles l'information principale est enregistrée et en ce que dans la piste d'introduction (91) la Commande de Saut est enregistrée dans le canal de sous-code R-W.

19. Système suivant la revendication 17, caractérisé en ce que la Commande de Saut enregistrée dans la piste d'introduction (91) est d'un type qui indique une recherche de paquets enregistrés dans une prépause de piste (93) d'une piste d'information principale.

20. Système suivant la revendication 19, caractérisé en ce que ladite prépause de piste (93) est celle de la première piste d'information principale (piste 1, index 1).

21. Système suivant l'une quelconque des revendications 1 à 20, caractérisé en ce que dans le canal de sous-information, la même information est enregistrée un certain nombre de fois.

22. Support d'information sur lequel l'information principale de concert avec la sous-information a été enregistrée, des bits de sous-information numérique formant un canal de sous-information, caractérisé en ce que chacun desdits paquets de canaux de sous-information (30) comprend au moins un code de catégorie indiquant le type d'information compris dans le paquet, des paquets de codes de catégories différentes étant entrelacés.

23. Support d'information suivant la revendication 22, caractérisé en ce que les paquets (30) comprennent un code de catégorie principale (MIC8-MIC0) indiquant la catégorie principale à laquelle l'information dans les paquets correspondants appartient.

24. Support d'information suivant la revendication 23, caractérisé en ce que les paquets comprennent un code de sous-catégorie (SIC7-SIC0) indiquant la sous-catégorie à laquelle l'information du paquet (30) appartient.

25. Support d'information suivant l'une quelconque des revendications 22, 23 ou 24, caractérisé en ce que les paquets (30) comprennent du texte codé ou de l'information d'image et des codes de commande supplémentaires.

26. Support d'information suivant la revendication 25, caractérisé en ce que les codes de commande en paquets comprenant du texte codé ou de l'information d'image comprennent des codes de position (L4-L0; LCD1-LCD0) indiquant à quel emplacement sur l'affichage (79; 79a) cette information sera affichée.

27. Support d'information suivant la revendication 26, caractérisé en ce que lesdits codes de commande (L4-L0; LCD1-LCD0) comprennent des codes de position pour au moins deux dispositifs d'affichage (79; 79a) dont le nombre de lignes pouvant être affichées est différent.

28. Support d'information suivant l'une quelconque des revendications 25, 26 ou 27, caractérisé en ce qu'au moins un paquet (30) comprend au moins un code de commande destiné à commander des dispositifs.

29. Support d'information suivant la revendication 28, caractérisé en ce que les codes de commande comprennent un code d'affichage de commutation MARCHE et un code d'affichage de commutation ARRET destinés à la commutation MARCHE et la commutation ARRET de l'affichage (79; 79a) de l'information codée.

30. Support d'information suivant la revendication 28 ou 29, caractérisé en ce que les codes de commande comprennent des codes de sélection de catégories destinés à sélectionner la catégorie d'information des paquets (30) devant être séparés.

31. Support d'information suivant l'une quelconque des revendications 27 à 30, caractérisé en ce que le support d'information (70) est pourvu d'une information d'adresse indiquant les positions d'enregistrement de l'information principale, en ce que les codes de commande comprennent des codes de Commande de Saut destinés à amorcer une recherche de l'information principale avec l'adresse indiquée par le code de commande précité.

32. Support d'information suivant l'une quelconque des revendications 22 à 31, caractérisé en ce que plusieurs paquets de la même catégorie d'information forment des groupes, le début de chaque groupe étant indiqué par un code de départ (CDS), en ce qu'après un changement de la catégorie sélectionnée, la séparation des paquets présentant l'information de la catégorie nouvellement sélectionnée est postposée jusqu'à la détection d'un code de départ (CDS) dans le groupe de paquets présentant la catégorie d'information nouvellement sélectionnée.

33. Support d'information suivant l'une quelconque des revendications 25 à 32, caractérisé en ce que des lignes de texte codé de menus et des codes de commande correspondants sont enregistrées dans les paquets (30).

34. Support d'information suivant la revendication 33, caractérisé en ce que les codes de commande comprennent un code d'adresse de menu destinés à amorcer l'affichage d'un autre menu stocké dans la mémoire sur une adresse indiquée par le code d'adresse de menu.

35. Support d'information suivant l'une des revendications 33 ou 34, caractérisé en ce que les paquets (30) comprennent un code d'index indiquant l'adresse de l'emplacement auquel les lignes de texte de menu codé et les codes de commande correspondants doivent être stockées dans une mémoire de menu (82).

36. Support d'information suivant l'une quelconque des revendications 22 à 35, caractérisé en ce que les paquets (30) sont enregistrés dans le canal de sous-code R à W d'un signal CD enregistré sur le support d'information.

37. Support d'information suivant l'une quelconque des revendications 31 à 36, caractérisé en ce que le support d'information est un disque CD ou CDV possédant une TABLE DES MATIERES (TOC) étant enregistrée dans une piste d'introduction (91) précédant les pistes d'information principale dans lesquelles l'information principale est enregistrée et en ce que dans la piste d'introduction (91) la Commande de Saut est enregistrée dans le canal de sous-code R-W.

38. Support d'information suivant la revendication 37, caractérisé en ce que la Commande de Saut enregistrée dans la piste d'introduction (91) est d'un type qui indique une recherche de paquets enregistrés dans une prépause de piste (93) d'une piste d'information principale.

39. Support d'information suivant la revendication 38, caractérisé en ce que ladite prépause de piste (93) est celle de la première piste d'information principale (piste 1, index 1).

40. Support d'information suivant l'une quelconque des revendications 22 à 39, caractérisé en ce que dans le canal de sous-information, la même information est enregistrée un certain nombre de fois.

41. Dispositif à utiliser en combinaison avec un support d'information (70), sur lequel l'information principale de concert avec une sous-information a été enregistrée, des bits de sous-information numérique formant un canal de sous-information, chacun desdits paquets de canaux de sous-information (30) comprenant au moins un code de catégorie indiquant le type d'information compris dans le paquet, et des paquets de codes de catégories différentes étant entrelacés, le dispositif étant pourvu de moyens de lecture (72, 74, 76) destinés à lire de l'information à partir du support d'information (70) et des moyens (81) destinés à séparer des bits d'un canal de sous-information de l'information lue, caractérisé en ce que le dispositif est pourvu de moyens de sélection (83) destinés à sélectionner une catégorie d'information et de moyens (77) destinés à séparer les paquets de la catégorie d'information sélectionnée des bits de canal de sous-information séparés.

42. Dispositif suivant la revendication 41, caractérisé en ce que les moyens de séparation (77) comprennent des moyens de détection de code de catégorie destinés à détecter un code de catégorie principale dans les paquets (30), les moyens de séparation (77) étant agencés pour séparer les paquets dont le code de catégorie principale détecté correspond à la catégorie d'information principale séparée.

43. Dispositif suivant la revendication 42, caractérisé en ce que les moyens de détection sont agencés pour détecter des combinaisons de code de catégorie principale et de code de sous-catégorie dans les paquets, les moyens de séparation (77) étant agencés pour séparer les paquets (30) dont la combinaison détectée de code de catégorie principale et de sous-catégorie correspond à la catégorie principale et la sous-catégorie sélectionnées.

44. Dispositif suivant la revendication 42 ou 43, caractérisé en ce que le dispositif est pourvu de moyens pour détecter la présence d'un code de catégorie prédéterminé dans les paquets et en ce que les moyens de séparation (77) sont adaptés pour séparer les paquets avec le code de catégorie principale prédéterminé précité, indépendamment du code de catégorie principale sélectionné.

45. Dispositif suivant la revendication 42, 43 ou 44, caractérisé en ce que le dispositif est pourvu de moyens pour détecter la présence d'un code de sous-catégorie prédéterminé dans les paquets, et en ce que les moyens de séparation (77) sont adaptés pour séparer les paquets avec le code de sous-catégorie prédéterminé précité, indépendamment de la sous-catégorie sélectionnée.

46. Dispositif suivant l'une quelconque des revendications 41 à 45, caractérisé en ce que le dispositif comprend au moins un dispositif d'affichage (79; 79a) destiné à afficher le texte codé ou l'information d'image sur un emplacement d'affichage indiqué par les codes de position, transférés par l'intermédiaire des paquets séparés (30).

47. Dispositif suivant l'une quelconque des revendications 41 à 46, caractérisé en ce que le dispositif est pourvu de dispositifs qui peuvent être commandés par l'intermédiaire de signaux de commande amenés à ceux-ci, le dispositif étant en outre caractérisé par des moyens d'amenée de signaux de commande au dispositif pouvant être commandés en réponse à des codes de commande transférés au dispositif par l'intermédiaire des paquets (30) séparés.

48. Dispositif suivant la revendication 47, caractérisé par des moyens (77) de commutation MARCHE et des moyens de commutation ARRET de l'affichage d'information en réponse à un code de commande d'affichage MARCHE et d'affichage ARRET, respectivement.

49. Dispositif suivant la revendication 47 ou 48, caractérisé en ce que les moyens de séparation (77) sont du type dans lequel la catégorie d'information des paquets (30) devant être sélectionnés peut être réglée au moyen des codes de sélection de catégorie transférés à l'agencement par l'intermédiaire des paquets (30) séparés.

50. Dispositif suivant l'une quelconque des revendications 48, 49 ou 50, caractérisé en ce que les moyens de lecture sont pourvus de moyens pour la recherche de l'information principale enregistrée sur un emplacement indiqué par une adresse, et en ce que l'agencement est pourvu de moyens pour amener un code de commande aux moyens de recherche en réponse à un code de Commande de Saut transféré par l'intermédiaire des paquets séparés afin d'indiquer la recherche de l'information indiquée par une adresse comprise dans le code de commande précité.

51. Dispositif suivant l'une quelconque des revendications 48 à 50, caractérisé en ce que les moyens de séparation sont agencés pour faire débuter la séparation en réponse à la détection d'un code de démarrage indiquant le début d'un groupe de paquets avec l'information sélectionnée.

52. Dispositif suivant l'une quelconque des revendications 48 à 51, caractérisé en ce que le dispositif comprend une mémoire de menu et des moyens pour charger des lignes de menus et des codes de commande correspondants de paquets séparés dans la mémoire de menu.

53. Dispositif suivant la revendication 52, caractérisé par des moyens destinés à amener les lignes de texte de menus codé stockées dans la mémoire de menu à des moyens d'affichage, des moyens de sélection d'une ligne de texte de menu affichée par les moyens d'affichage, des moyens d'amenée du code de commande stocké dans la mémoire et correspondant à la ligne de texte de menu sélectionnée à des dispositifs de commande destiné à commander le dispositif.

54. Dispositif suivant la revendication 52 ou 53, caractérisé par des moyens d'introduction actionnables manuellement destinés à appeler directement un code de commande stocké dans les mémoires de menus.

55. Dispositif suivant la revendication 54, caractérisé par des moyens d'actionnement manuel destinés à rechercher l'adresse dans la mémoire de menu à laquelle une ligne de menu sélectionnée est stockée.

56. Dispositif suivant l'une quelconque des revendications 52, 53 ou 54, caractérisé en ce que le dispositif est pourvu d'une seconde mémoire de menu du type ROM, dans laquelle de l'information de menu est stockée d'une façon analogue que dans la première mémoire de menu, le dispositif étant en outre pourvu de moyens de sélection destinés à sélectionner de laquelle des deux mémoires de menu des lignes de texte de menus doivent être affichées.
